# EUROPEAN PATENT APPLICATION

(11) **EP 3 252 629 A1**
(43) Date of publication of application: **06.12.2017**
(21) Application number: 17167030.0
(22) Date of filing: 19.04.2017
(51) Int. Cl.: G06F 17/50

(54) **DISPLAY CONTROL METHOD, DISPLAY CONTROL DEVICE, AND DISPLAY CONTROL PROGRAM**

(30) Priority: 31.05.2016 JP 2016109330
(71) Applicant: Fujitsu Limited, Kawasaki-shi, Kanagawa 211-8588 (JP)
(72) Inventor: Taguchi, Terutoshi, Kanagawa, 243-0018 (JP); Yamada, Masahiko, Kanagawa, 243-0018 (JP)
(74) Representative: Hoffmann Eitle

(57) **Abstract**

In a display control method, CAD data (30) of an assembly is obtained and, from among assembling parts and individual components representing the constituent elements of the assembly indicated by the CAD data (30), images corresponding to the assembling parts excluding the individual components and an image corresponding to the assembly are displayed in an overview display area (62). In response to the selection of the image corresponding to the assembly, a list of images, which includes images corresponding to assembling parts representing the constituent elements of the assembly and images corresponding to the individual components, is displayed in a details display area (63) different than the overview display area (62).

## Description

### FIELD

The embodiment discussed herein is related to a display control method, a display control device, and a display control program.

### BACKGROUND

Typically, a tree expression is known as the standard user interface (UI) of graphical nature for expressing the design configuration of an assembly. In a tree expression, a plurality of components/assembling parts constituting an assembly are displayed in different layers than a plurality of components/sub-assembling parts constituting the assembling parts. That results in the expression of a hierarchical structure of the assembly.

Moreover, as an UI for expressing the flow of the assembling task for an assembly, a structure flow (also called an assembling flow) is known. The structure flow expresses, in a list form, the process of manufacturing a product, such as who does which tasks at what assembling unit (assembling configuration); what is the sequence of using components and units; what (tools) needs to be used; and what are the processes (applying an adhesive agent or putting on a paint on components). Such a structure flow is created based on design configuration data by taking into account the work efficiency and the ease of assembling at the time of assembling an assembly and by taking into account the manufacturing resources (the manufacturing line, the tools, and the staffing level). Moreover, such a structure flow is created by adding a new configuration for assembling (unit for the assembling task), changing the sequence by keeping in mind the assembling of products and units, and adding the tools and task details.
Patent Document 1: Japanese Laid-open Patent Publication No. 2003-99109
Patent Document 2: Japanese Laid-open Patent Publication No. 2010-113425
Patent Document 3: Japanese Laid-open Patent Publication No. 2005-267475
Patent Document 4: Japanese Laid-open Patent Publication No. 2003-308545

However, in the structure flow described above, since the part numbers of units and components are expressed in a list form, it is difficult to imagine the units/components and the assembly only by referring to the list. Moreover, since the structure flow includes all the information used in manufacturing that is requested as the final output, the length of the list increases by necessity thereby making it difficult to understand the configuration of the entire product or the assembling sequence of units.

Accordingly, it is an object in one aspect of an embodiment of the invention to provide a display control method, a display control device, and a display control program that displays the overall configuration and the assembling configuration of an assembly in an easy-to-understand manner.

### SUMMARY

According to an aspect of the embodiments, a display control method includes: obtaining configuration information of an assembly; displaying, from among an assembling part and an individual component representing constituent elements of the assembly indicated by the configuration information of the assembly, an image corresponding to the assembling part excluding the individual component and an image corresponding to the assembly, in a first area; and displaying, in response to selection of the image corresponding to the assembly, a list of images, which includes an image corresponding to an assembling part representing a constituent element of the assembly and an image corresponding to the individual component, in a second area different than the first area.

### BRIEF DESCRIPTION OF DRAWINGS

FIG. 1 is a diagram illustrating an overall configuration of a display control device according to an embodiment;
FIG. 2 is a diagram illustrating an example of component data;
FIG. 3 is a diagram illustrating an exemplary data structure of component data;
FIG. 4 is a diagram illustrating an example of the relationship between the shape of a component and shape information;
FIG. 5 is a diagram illustrating an example of data recorded as shape information;
FIG. 6 is a diagram illustrating an example of assembling part data;
FIG. 7 is a diagram illustrating the details of the data structure of assembling part data;
FIG. 8 is a conceptual diagram illustrating an exemplary assembling part;
FIG. 9 is a diagram illustrating an exemplary screen displayed on a display unit;
FIG. 10 is a flowchart for explaining the operations for displaying the constituent elements of the selected assembling part;
FIG. 11 is a flowchart for explaining the operations performed to set the selected assembling part as a constituent element of another assembling part;
FIG. 12 is a flowchart for explaining the operations for setting a constituent element, which has been selected using a virtual block, as a constituent element of another assembling part;
FIG. 13 is a diagram illustrating another example of the screen displayed on the display unit;
FIG. 14 is a diagram illustrating a screen after a single image has been associated to another image in the screen illustrated in FIG. 13;
FIG. 15 is a diagram illustrating still another example of the screen displayed on the display unit;
FIG. 16 is a diagram illustrating the screen after a single image has been associated to another image in the screen illustrated in FIG. 15; and
FIG. 17 is a diagram illustrating an exemplary computer that executes a display control program.

### DESCRIPTION OF EMBODIMENTS

Preferred embodiments will be explained with reference to accompanying drawings. In a plurality of working examples, the configurations having identical function are referred to by the same reference numerals, and the redundant explanation is not repeated. Meanwhile, the display control method, the display control device, and the display control program described below are only exemplary, and the invention is not limited by the embodiment described below. Moreover, the working examples described below can be appropriately combined without causing any contradictions.

### Display control device

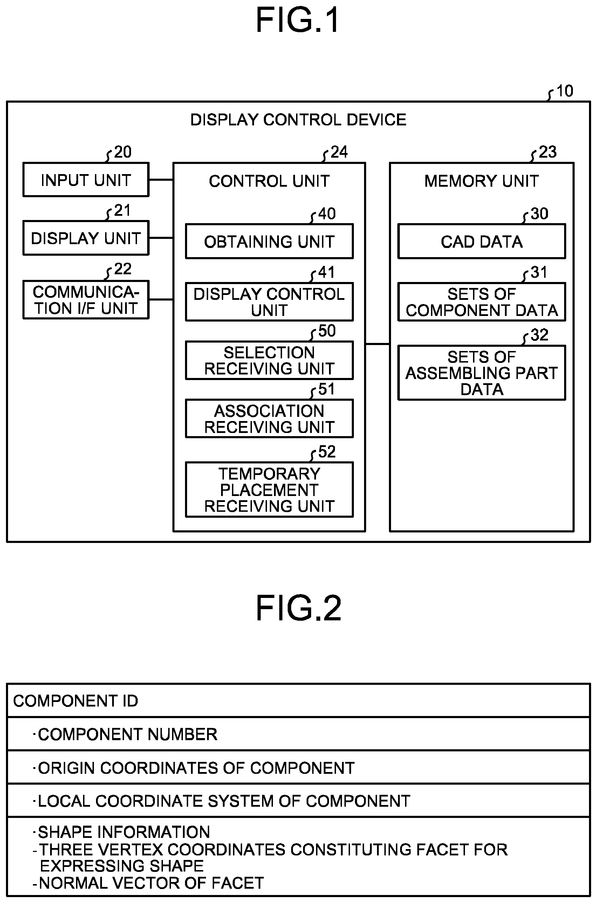

FIG. 1 is a diagram illustrating an overall configuration of a display control device according to the embodiment. A display control device 10 according to the embodiment displays a plurality of constituent elements of an assembly, and supports creation of a document (assembling configuration) related to the assembly. The display control device 10 is, for example, a computer such as a personal computer or a server computer. Herein, the display control device 10 either can be configured with a single computer or can be configured as a cloud having a plurality of computers. In the embodiment, the explanation is given for an example in which the display control device 10 is configured with a single computer. Furthermore, the display control device 10 can be a designing device in which designing software such as CAD software (CAD stands for Computer Aided Design) runs so as to support the designing done by a designer. As illustrated in FIG. 1, the display control device 10 includes an input unit 20, a display unit 21, a communication interface (I/F) unit 22, a memory unit 23, and a control unit 24.

The input unit 20 is an input device that receives input of a variety of information. Examples of the input unit 20 include input devices such as a mouse and a keyboard that receive input of operations. The input unit 20 receives input of a variety of information. For example, the input unit 20 receives input of various operations related to the selection of constituent elements. The input unit 20 receives input of operations from the user, and outputs control information indicating the details of the input operations to the control unit 24.

The display unit 21 is a display device in which a display surface is formed. Examples of the display unit 21 include display devices such as a liquid crystal display (LCD) and a cathode ray tube (CRT). The display unit 21 displays a variety of information on the display surface. For example, the display unit 21 displays, on the display surface, various screens such as a screen in which an object representing a finished product made of a plurality of constituent elements is placed in a three-dimensional CAD space (described later).

The communication I/F unit 22 is an interface that performs communication control with other devices. The communication I/F unit 22 sends a variety of information to and receives a variety of information from other devices via a network (not illustrated). For example, the communication I/F unit 22 receives CAD data 30 (described later) from other devices. As the communication I/F unit 22, it is possible to use a network interface card such as a LAN card (LAN stands for Local Area Network). Meanwhile, the display control device 10 can obtain information, such as the CAD data 30, via a memory medium such as a memory card. Alternatively, the CAD data 30 can be input from the input unit 20.

The memory unit 23 is a memory device such as a hard disk, a solid state drive (SSD), or an optical device. Alternatively, the memory unit 23 can be a data-rewritable semiconductor memory. Examples of a semiconductor memory include a random access memory (RAM), a flash memory, and a non-volatile static random access memory (NVSRAM).

The memory unit 23 is used to record the operating system (OS) and various computer programs run in the control unit 24. For example, the memory unit 23 is used to store a computer program that performs various operations for selecting some of the constituent elements of a finished product (described later). Moreover, the memory unit 23 is used to store a variety of data used in the computer programs that are run in the control unit 24. For example, the memory unit 23 is used to store the CAD data 30, a plurality of sets of component data 31, and a plurality of sets of assembling part data 32.

The CAD data 30 represents data created by a CAD device and represents design data based on a three-dimensional CAD. In the CAD data 30 is stored a variety of design information such as three-dimensional coordinate information indicating the shape of each component of a finished product that is made of a plurality of individual components. The sets of component data 31 and the sets of assembling part data 32 represent data created as a result of data conversion performed with respect to the CAD data 30 by the control unit 24. The sets of component data 31 represent a plurality of individual components constituting a finished product and indicate the attributes related to those individual components. The sets of assembling part data 32 represent a plurality of assembling parts included in a finished product, and indicate the constituent elements of the assembling parts along with the attributes related to the assembling parts. A constituent element either represents a single individual component from among a plurality of individual components, or represents a single assembling part made of some individual components.

The control unit 24 controls the display control device 10. As the control unit 24, it is possible to use an electronic circuit or an integrated circuit. Examples of an electronic circuit include a central processing unit (CPU) and a micro processing unit (MPU). Examples of an integrated circuit include an application specific integrated circuit (ASIC) and a field programmable gate array (FPGA). The control unit 24 has an internal memory for storing computer programs, in which various procedures are defined, and control data; and performs various operations using the stored information. As a result of executing various control programs, the control unit 24 functions as various processing units. For example, the control unit 24 includes an obtaining unit 40, a display control unit 41, a selection receiving unit 50, an association receiving unit 51, and a temporary placement receiving unit 52.

The obtaining unit 40 obtains the CAD data 30 from an external device, and stores the obtained CAD data 30 in the memory unit 23. Moreover, the obtaining unit 40 performs data conversion with respect to the CAD data 30 so as to create the sets of component data 31 and the sets of assembling part data 32, and stores the sets of component data 31 and the sets of assembling part data 32 in the memory unit 23.

The selection receiving unit 50 selects, based on the information input via the input unit 20, a single assembling part image from among a plurality of assembling part images displayed on the screen by the display unit 21. The association receiving unit 51 associates, based on the information input via the input unit 20, a single assembling part image, from among a plurality of assembling part images displayed on the screen by the display unit 21, with another assembling part image. The temporary placement receiving unit 52 associates, based on the information input via the input unit 20, a single assembling part image, from among a plurality of assembling part images displayed on the screen by the display unit 21, with a virtual block. Moreover, the temporary placement receiving unit 52 associates, based on the information input via the input unit 20, the virtual block, which is displayed on the screen by the display unit 21, with one of a plurality of assembling part images.

The display control unit 41 creates a screen based on the sets of component data 31 and the sets of assembling part data 32, and displays the created screen on the display screen of the display unit 21. When the selection receiving unit 50 selects a single assembling part image, the display control unit 41 displays an updated screen, which has been updated based on the selected assembling part image, on the display screen of the display unit 21. When the association receiving unit 51 associates a single assembling part image with another assembling part image, the display control unit 41 displays an updated screen, which has been updated based on that association, on the display screen of the display unit 21. When the temporary placement receiving unit 52 associates an assembling part image with a virtual block, the display control unit 41 displays an updated screen, which has been updated based on that association, on the display screen of the display unit 21. When the temporary placement receiving unit 52 associates a virtual block to an assembling part image, the display control unit 41 displays an updated screen, which has been updated based on that association, on the display screen of the display unit 21.

### Component data

FIG. 2 is a diagram illustrating an example of component data. The sets of component data 31 correspond to a plurality of individual components constituting a finished product. From among the sets of component data 31, a single set of component data corresponding to a particular individual component indicates attribute information related to that individual component. For example, as illustrated in FIG. 2, each of a plurality of sets of component data 31 indicates the following information as component attribute information related to a component: a component ID, a component number, origin coordinates of the component, a local coordinate system of the component, and shape information.

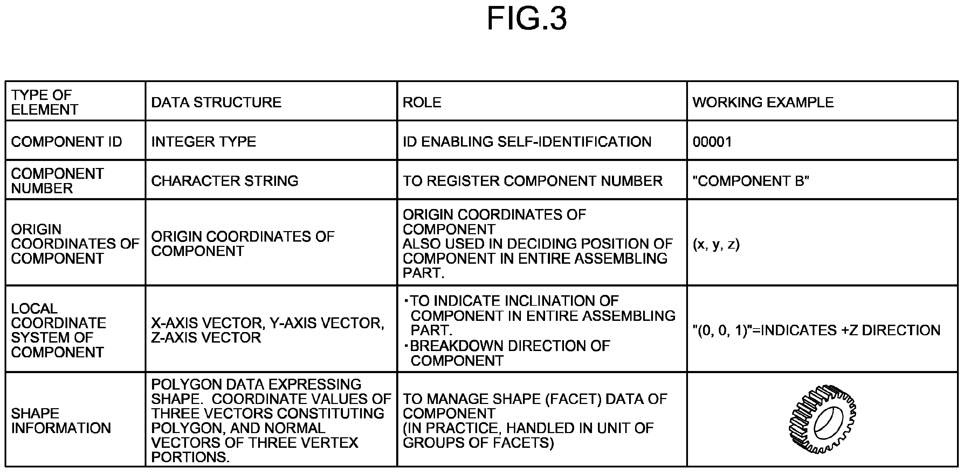

FIG. 3 is a diagram illustrating an exemplary data structure of component data. As illustrated in FIG. 3, the component ID is information expressed using an integer, and represents identification information assigned to each component constituting a finished product. That is, each component is assigned with a specific number that enables identification of that component. The component number is information expressed using a character string, and indicates the component number and the component name assigned to a component. The origin coordinates of a component is information indicating the coordinates, from among the coordinates in a three-dimensional CAD space, used as the origin of the position information related to the component. As far as the origin coordinates of components are concerned, either it is possible to have different origin coordinates for each component, or it is possible to use a common origin for all components. The local coordinate system of components is component-by-component information indicating, with reference to the original coordinates of a component, a coordinate system used in defining the position of that component in a three-dimensional CAD space. As far as the local coordinate system of components is concerned, either it is possible to have a different coordinate system for each component, or it is possible to use a common coordinate system for all components. The shape information is component-by-component information indicating the shape of a component in the local coordinate system with reference to the origin coordinates of that component.

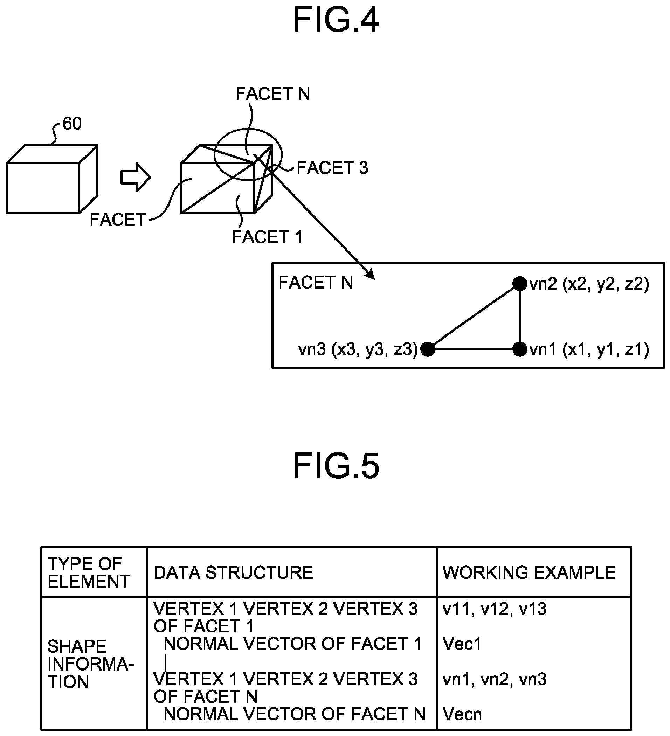

FIG. 4 is a diagram illustrating an example of the relationship between the shape of a component and shape information. For example, as illustrated in FIG. 4, regarding a component 60 having a cuboid external form, the shape of the external form is defined by a combination of triangular facets facet1 to facetN. For example, the triangular facet facetN has the position thereof fixed in a three-dimensional CAD space by three-dimensional coordinates (x1, y1, z1), (x2, y2, z2), and (x3, y3, z3) of the three vertices thereof and by the normal vector thereof.

FIG. 5 is a diagram illustrating an example of data recorded as shape information. As illustrated in FIG. 5, the shape information of each set of component data 31 indicates, for each of the triangular facets facet1 to facetN constituting the corresponding component, vertex coordinates forming a triangular shape and the normal vector of a triangular face.

### Assembly data

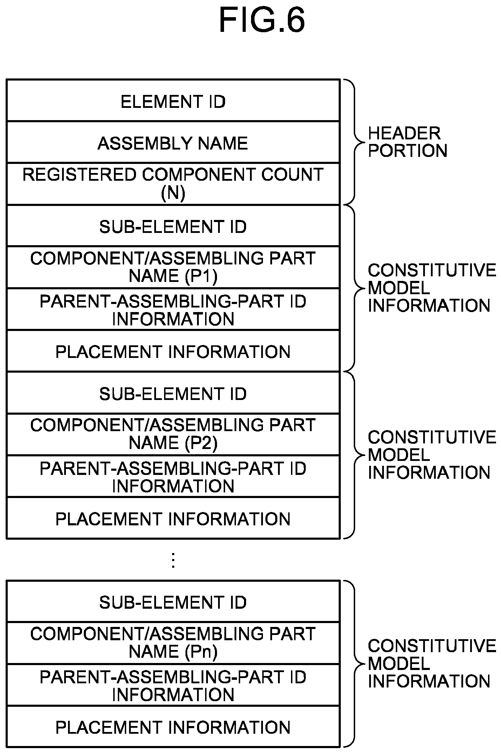

FIG. 6 is a diagram illustrating an example of assembling part data. The sets of assembling part data 32 correspond to a plurality of assembling parts. Each assembling part is included in the finished product and is made of some individual components from among a plurality of individual components corresponding to the sets of component data 31. From among the sets of assembling part data 32, the assembling part data corresponding to a particular assembling part indicates the attributes related to that assembling part. For example, as illustrated in FIG. 6, each set of assembling part data 32 indicates a header portion and a plurality of sets of constitutive model information. The header portion indicates an element ID, an assembling part name, and a registered component count. Each set of constitutive model information indicates a sub-element ID, a component/assembling part name, parent-assembling-part ID information, and placement information.

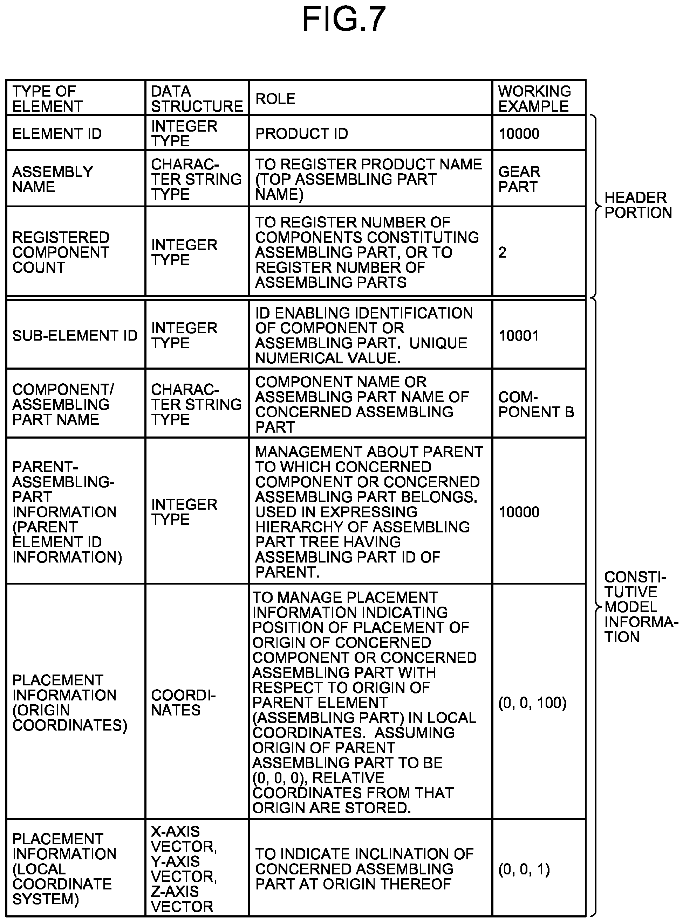

FIG. 7 is a diagram illustrating the details of the data structure of assembling part data. As illustrated in FIG. 7, for each set of assembling part data, the element ID in the header portion is information expressed using an integer, and represents identification information assigned to the assembling part constituting a finished product. That is, each assembling part is assigned with a specific number that enables identification of that assembling part. The assembling part name is information expressed using a character string, and indicates the name associated to the assembling part identified by the element ID. The registration component count is information expressed using an integer, and indicates the total number of constituent elements (individual components or assembling parts) of the assembling part identified by the element ID.

A plurality of sets of constitutive model information corresponds to a plurality of constituent elements of the assembling part indicated by the header portion. That is, the registration component count of the header portion indicates the number of sets of the constitutive model information. The sequence in which the sets of constitutive model information is stored in the assembling part data matches with the sequence in which the constituent elements corresponding to the sets of constitutive model information are assembled in the assembling part indicated by the assembling part data. From among a plurality of sets of constitutive model information, in a single set of constitutive model information corresponding to a single constituent element, the sub-element ID is information expressed using an integer and represents identification information assigned to that constituent element. Hence, the sub-element ID indicates the element ID of one of the sets of component data 31, or indicates the element ID of one of the sets of assembling part data 32. The component/assembling part name is information expressed using a character string, and indicates the name of the individual component or the assembling part identified by the sub-element ID. The parent-assembling-part ID information is information expressed using an integer, and indicates identification information of the parent assembling part made of the constituent element identified by the sub-element ID, that is, indicates identification information indicated by the element ID in the header portion. The placement information indicates the origin coordinates and the local coordinate system. The origin coordinates are information expressed using coordinates, and represent the position at which the origin of the constituent element identified by the sub-element ID is placed in the parent assembling part. The local coordinate system is information expressed using the X-axis vector, the Y-axis vector, and the Z-axis vector; and represents the inclination of the constituent element identified by the element ID.

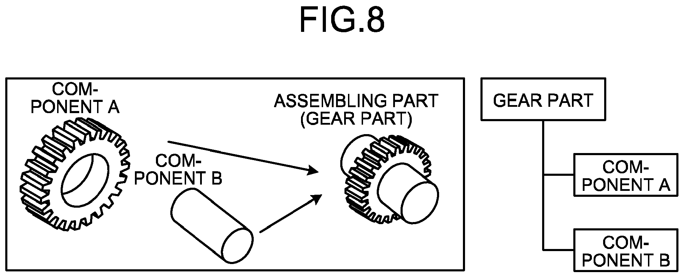

FIG. 8 is a conceptual diagram illustrating an exemplary assembling part. As illustrated in FIG. 8, the exemplary assembling part is associated to a name "gear part" and is configured by assembling two individual components. One of the two components is associated to a name "component A", and the other component is associated to a name "component B". From among the sets of assembling part data 32, the assembling part data corresponding to the concerned assembling part indicates the name "gear part" as the assembling part name in the header portion. The registration component count indicates "2". From among a plurality of sets of constitutive model information of the assembling part data, in the first set of constituting model information, the component/assembling part name indicates the name "component A". Moreover, from among a plurality of sets of constitutive model information, in the second set of constituting model information, the component/assembling part name indicates the name "component B".

### Screen displayed on display unit

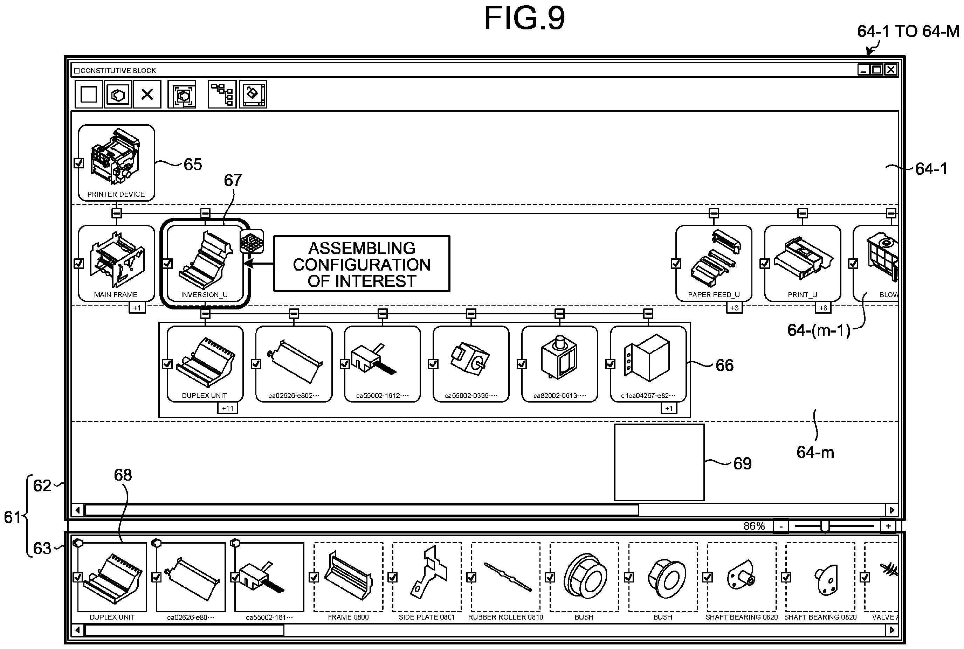

FIG. 9 is a diagram illustrating an exemplary screen displayed on the display unit. As illustrated in FIG. 9, a screen 61 displayed on the display unit 21 includes an overview display area 62 and a details display area 63. The overview display area 62 is divided into a plurality of layers 64-1 to 64-M (where M=2, 3, 4, and so on). From among the layers 64-1 to 64-M, in the uppermost layer 64-1 is displayed an image 65 that is a three-dimensional-shape image of a top assembling part and that sterically expresses the top assembling part on a plane. From among the layers 64-1 to 64-M, in the layers 64-m (where m=2, 3, ..., M) excluding the uppermost layer 64-1, a plurality of images and a plurality of lines is displayed. Herein, the images correspond to a plurality of assembling parts. From among the images, an image 66 corresponding to a particular assembling part is a three-dimensional-shape image of that assembling part and sterically expresses the assembling part on a plane. Meanwhile, a plurality of lines corresponds to a plurality of images. From among the lines, the line corresponding to a particular image joins that image with a single image displayed in the layer 64-(m-1) that is the upper layer of the layer 64-m from among the layers 64-1 to 64-M. When an image 66 displayed in the layer 64-m is joined with an image 67 displayed in the layer 64-(m-1), it is indicated that the assembling part indicated by the image 66 is a constituent element of the assembling part indicated by the image 67.

In the details display area 63, a plurality of images 68 is displayed. The images 68 correspond to a plurality of constituent elements of the assembling part that is indicated by a single image selected by the user from among a plurality of images displayed in the overview display area 62. From among the images 68, the image corresponding to a particular constituent element is a three-dimensional-shape image of that constituent element and sterically expresses the top assembling part on a plane. Herein, a constituent element either represents an unassembled individual component from among a plurality of constituent elements, or represents an assembling part assembled from a plurality of constituent elements.

The screen 61 also has a virtual block 69 displayed y. In the virtual block 69, the image of the user-selected individual component or the user-selected assembling part is displayed.

### Display control method

A display control method according to the embodiment is implemented by the display control device 10. The display control method includes operations for displaying the constituent elements of the selected assembling part; operations for setting the selected assembling part as a constituent element of another assembling part; and operations for setting a constituent element, which has been selected using the virtual block, as a constituent element of another assembling part.

Operations for displaying the constituent elements of the selected assembling part

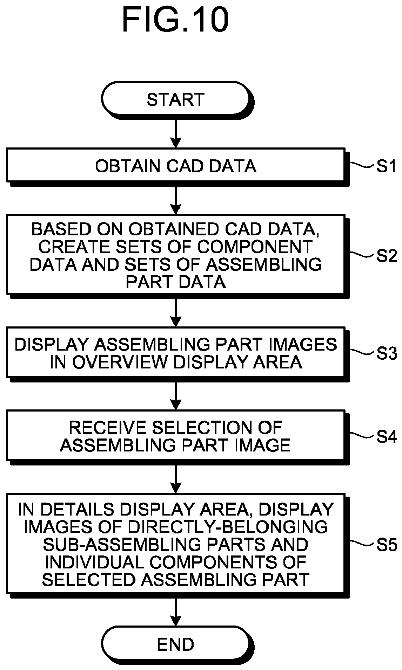

FIG. 10 is a flowchart for explaining the operations for displaying the constituent elements of the selected assembling part. As illustrated in FIG. 10, the display control device 10 obtains the CAD data 30 created by the design department (S1) and records the obtained CAD data 30 in the memory unit 23. Moreover, the display control device 10 performs data conversion with respect to the CAD data 30 to create a plurality of sets of component data 31 and a plurality of sets of assembling part data 32 (S2), and records the sets of component data 31 and the sets of assembling part data 32 in the memory unit 23.

Moreover, based on the sets of component data 31 and the sets of assembling part data 32, the display control device 10 creates a plurality of assembling part images corresponding to the sets of assembling part data 32. From among the assembling part images, the assembling part image corresponding to particular assembling part data is a three-dimensional-shape image of the assembling part indicated by the concerned assembling part data and is formed as a result of combining a plurality of constituent element images corresponding to a plurality of constituent elements indicated by the concerned assembling part data. From among a plurality of constituent element images, the constituent element image corresponding to a particular individual component is a three-dimensional-shape image of that individual component and is created based on the component data corresponding to that individual component from among the sets of component data 31. From among a plurality of constituent element images, the constituent element image corresponding to a particular assembling part is a three-dimensional-shape image of that assembling part and is created based on the assembling part data corresponding to that assembling part from among a plurality of sets of assembling part data 32.

Moreover, based on the assembling part images that are created, the display control device 10 creates the screen 61. That is, firstly, the display control device 10 places, from among a plurality of assembling part images, the assembling part image indicating the top assembling part in the uppermost layer 64-1 of the overview display area 62. When the assembling part image indicating a particular assembling part is placed in the layer 64-(m-1), the display control device 10 places the assembling part images of the assembling parts serving as the constituent elements of the particular assembling part in the layer 64-m which is one layer lower than the layer 64-(m-1). Furthermore, the display control device 10 writes lines that join the assembling part image of the particular assembling part with the assembling part images of the assembling parts serving as the constituent elements of the particular assembling part. At the time of placing, in a single layer 64-m, a plurality of assembling part images corresponding to a plurality of sets of constitutive model information of a particular set of assembling part data; the display control device 10 places the assembling part image corresponding to the high-order set of constitutive model information on the left-hand side. Then, the display control device 10 displays, on the display screen of the display unit 21, the screen 61 having the overview display area 62 created in the manner described above (S3). Thus, in the overview display area 62, initially, images of individual components are not displayed, and only the images of assembling parts are displayed.

When the screen 61 is displayed on the display screen of the display unit 21, the user can operate the input unit 20 and select a single assembling part image from among the assembling part images displayed in the overview display area 62. As a result of the operation of the input unit 20, when a single assembling part image is selected from among the assembling part images displayed in the overview display area 62 (S4), the display control device 10 calculates the assembling part data corresponding to the selected assembling part image from the sets of assembling part data 32. Then, based on the calculated assembling part data, the display control device 10 creates a plurality of constituent element images corresponding to the directly-belonging sub-assembling parts and individual components derived from a plurality of sets of constitutive model information included in the concerned assembling part data. From among a plurality of constituent element images, the constituent element image corresponding to a particular individual component is a three-dimensional-shape image and is created based on the component data corresponding to that individual component from among the sets of component data 31. From among a plurality of constituent element images, the constituent element image corresponding to a particular assembling part is a three-dimensional-shape image of that assembling part and is created based on the assembling part data corresponding to that assembling part from among the sets of assembling part data 32. The display control device 10 displays the constituent element images in the details display area 63 in such a way that the constituent element image corresponding to the high-order constitutive model information is placed on the left-hand side (S5). Thus, in the details display area 63 are displayed the assembling parts and the individual components representing the constituent elements of the assembling part that is indicated in the assembling part image selected in the overview display area 62.

As a result of such operations, the display control device 10 does not display the individual components, which are the constituting elements of an assembling part, in the overview display area 62, so that the number of images displayed in the overview display area 62 can be reduced and the overall configuration of the assembly can be displayed in an easy-to-understand manner. Moreover, the display control device 10 displays all constituent elements of an assembling part in the details display area 63 so that the assembling configuration of the assembly can be displayed in an easy-to-understand manner. Thus, the display control device 10 displays all constituent elements of an assembling part in the details display area 63 and displays only a simple overall configuration in the overview display area 62, so that the overall configuration as well as the assembling configuration of the assembly can be displayed in an easy-to-understand manner.

When the individual component images indicating individual components are displayed in the details display area 63, the user can operate the input unit 20 and change the setting so that the individual component images are displayed in the overview display area 62. The display control device 10 records, in the memory unit 23, a plurality of sets of display setting data corresponding to a plurality of sets of component data 31. Each set of display setting data initially indicates "no display". When the setting is so changed that a single individual component image indicating an individual component is displayed in the overview display area 62, the display control device 10 updates the sets of display setting data in such a way that "display" is specified in the display setting data corresponding to the concerned individual component from among the sets of display setting data. When "display" is specified in the display setting data corresponding to a particular individual component of a particular assembling part; the display control device 10 displays, in the overview display area 62, the image of that particular individual component as a constituent element of that particular assembling part. As a result of such operations, when the overall configuration is difficult to understand because the image of a particular individual component is not displayed in the overview display area 62, the user can ensure that the image of that particular individual component is displayed in the overview display area 62 and thus can make it easier to understand the configuration of the assembling part.

When a plurality of constituent element images is displayed in the details display area 63, the user can operate the input unit 20 and change the sequence of display of the constituent element images displayed in the details display area 63. When there is a change in the sequence of display of a plurality of constituent element images indicating the constituent elements of a particular assembling part, the display control device 10 updates the assembling part data corresponding to that particular assembling part from among the sets of assembling part data 32. By updating the assembling part data, the display control device 10 makes the sequence of a plurality of sets of constitutive model information included in the assembling part data to be identical to the changed sequence of the constituent element images as changed by the user. Thus, by changing the sequence of display of the constituent element images indicating the constituent elements of an assembling part, the user can easily imagine the assembling configuration of the assembly and can easily create the assembling configuration of the assembly by referring to the constituent element images.

Operations for setting the selected assembling part as a constituent element of another assembling part

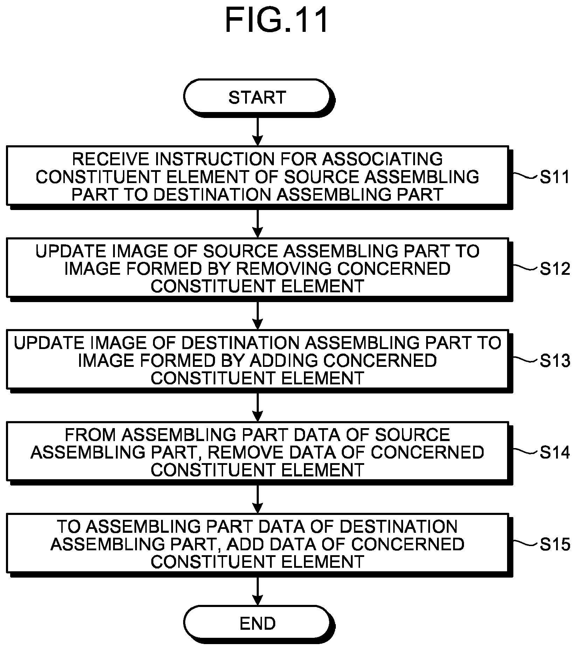

FIG. 11 is a flowchart for explaining the operations performed to set the selected assembling part as a constituent element of another assembling part. When the screen 61 is being displayed on the display screen of the display unit 21, the user can operate the input unit 20 and associate one constituent element of the source assembling part to the destination assembling part. For example, the user drags an image indicating one constituent element of the source assembling part and drops that image in the images of the destination assembling part, and thus associates one constituent element of the source assembling part to the destination assembling part (S11).

When one constituent element of the source assembling part is associated to the destination assembling part, the display control device 10 updates the assembling part images of the source assembling part in such a way that the image of the concerned constituent element is removed from the assembling part images of the source assembling part (S12).

Moreover, when one constituent element of the source assembling part is associated to the destination assembling part, the display control device 10 updates the assembling part images of the destination assembling part in such a way that the image of the concerned constituent element is added to the assembling part images of the destination assembling part (S13). At that time, in the updated assembling part images, the image of the concerned constituent element is displayed in such a way that the display positions of the assembling part and the constituent element have the same positional relationship as the positional relationship therebetween after they are assembled into the finished product.

Furthermore, when one constituent element of the source assembling part is associated to the destination assembling part, the display control device 10 searches the sets of assembling part data 32 for the assembling part data corresponding to the source assembling part. Then, the display control device 10 updates the retrieved assembling part data in such a way that the constitutive model information corresponding to the concerned constituent element is removed from the sets of constitutive model information included in the retrieved assembling part data (S14).

Moreover, when one constituent element of the source assembling part is associated to the destination assembling part, the display control device 10 searches the sets of assembling part data 32 for the assembling part data corresponding to the destination assembling part. Then, the display control device 10 updates the retrieved assembling part data in such a way that the constitutive model information of the concerned constituent element is added to the sets of constitutive model information included in the retrieved assembling part data (S15).

As a result of such operations, using the display control device 10, the user can associate one assembling part image to another assembling part image, and thus can easily change the constituent elements of the assembling parts.

Operations for setting a constituent element, which has been selected using a virtual block, as a constituent element of another assembling part

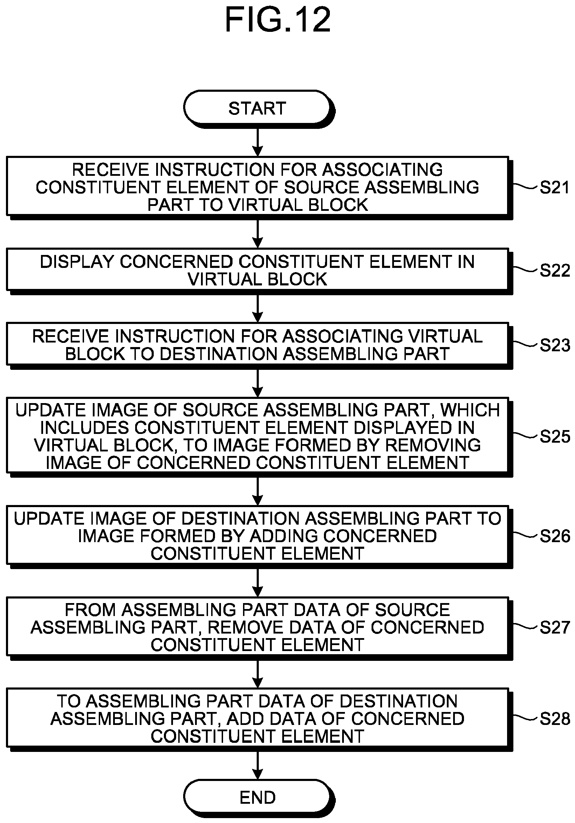

FIG. 12 is a flowchart for explaining the operations for setting a constituent element, which has been selected using a virtual block, as a constituent element of another assembling part. When the screen 61 is being displayed on the display screen of the display unit 21, the user can operate the input unit 20 and display the virtual block 69 at an appropriate position in the screen 61. Moreover, when the screen 61 is being displayed on the display screen of the display unit 21, the user can operate the input unit 20 and associate one constituent element of the source assembling part to the virtual block 69. For example, the user drags the image of one constituent element of the source assembling part and drops that image in the virtual block 69, and thus associates one constituent element of the source assembling part to the virtual block 69 (S21). When one constituent element of the source assembling part is associated to the virtual block 69, the display control device 10 displays the image of that constituent element in the virtual block 69 (S22). At that time, the display control device 10 does not update the assembling part images indicating the source assembling part, and keeps the image of the concerned constituent element displayed among the assembling part images indicating the source assembling part. For that reason, the image of the concerned constituent element is displayed at two locations, namely, among the assembling part images indicating the source assembling part and in the virtual block 69.

The operations at S21 and S22 can be performed repetitively. As a result of repetitively performing the operations at S21 and S22, a plurality of images each of which indicates one of a plurality of constituent elements is displayed in the virtual block 69.

When an image is being displayed in the virtual block 69, the user can operate the input unit 20 and cancel the association of the virtual block 69 and the concerned constituent element. If the association of the virtual block 69 and the concerned constituent element is cancelled, then the display control device 10 removes the image of the concerned constituent element from the virtual block 69.

When an image is being displayed in the virtual block 69, the user can operate the input unit 20 and associate the virtual block 69 to the destination assembling part. For example, the user drags the virtual block 69 and drops it on the image of the destination assembling part, and thus associates the virtual block 69 to the destination assembling part (S23).

When the virtual block 69 is associated to the destination assembling part, the display control device 10 updates the assembling part images of the source assembling part in such a way that the image of the constituent element displayed in the virtual block 69 is removed from the assembling part images of the source assembling part (S25).

Moreover, when the virtual block 69 is associated to the destination assembling part, the display control device 10 updates the assembling part images of the destination assembling part in such a way that the image of the constituent element displayed in the virtual block 69 is added to the assembling part images of the destination assembling part (S26). At that time, in the updated assembling part images, the image of the concerned constituent element is displayed in such a way that the display positions of the assembling part and the constituent element have the same positional relationship as the positional relationship therebetween after they are assembled into the finished product.

Furthermore, when the virtual block 69 is associated to the destination assembling part, the display control device 10 searches the sets of assembling part data 32 for the assembling part data corresponding to the source assembling part. Then, the display control device 10 updates the retrieved assembling part data in such a way that the constitutive model information corresponding to the constituent element displayed in the virtual block 69 is removed from the sets of constitutive model information included in the retrieved assembling part data (S27).

Moreover, when the virtual block 69 is associated to the destination assembling part, the display control device 10 searches the sets of assembling part data 32 for the assembling part data corresponding to the destination assembling part. Then, the display control device 10 updates the retrieved assembling part data in such a way that the constitutive model information of the constituent element displayed in the virtual block 69 is added to the sets of constitutive model information included in the retrieved assembling part data (S28).

If a plurality of images each of which indicates one of a plurality of constituent elements is displayed in the virtual block 69, when the virtual block 69 is associated to the destination assembling part, the operations from S25 to S27 are performed for each of those constituent elements. Moreover, when the virtual block 69, in which a plurality of images each of which indicates one of a plurality of constituent elements is displayed, is associated to the destination assembling part, the display control device 10 creates assembling part data corresponding to the assembling part made of those constituent elements. Then, the display control device 10 adds the newly-created assembling part data to the sets of assembling part data 32. Furthermore, the display control device 10 updates the assembling part data of the destination assembling part in such a way that the constitutive model information corresponding to the assembling part indicated by the newly-created assembling part data is added to the assembling part data corresponding to the destination assembling part.

As a result of such operations, the user can temporarily place, in the virtual block 69, such a constituent element for which the assembling configuration is not yet decided, and can do a review while imagining the constituent element assembled in the destination assembling part.

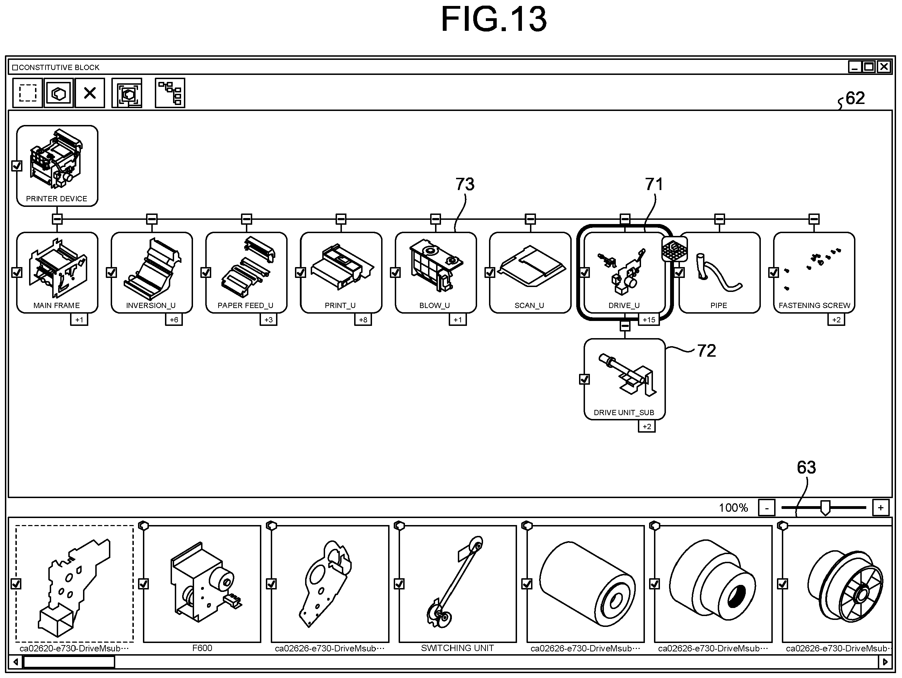

FIG. 13 is a diagram illustrating another example of the screen displayed on the display unit. As illustrated in FIG. 13, in the overview display area 62 of the screen 61, a plurality of assembling part images is displayed. A plurality of assembling part images includes assembling part images 71, 72, and 73. The assembling part image 71 has been selected by the user. As a result of being selected by the user, the assembling part image 71 is displayed in a boxed manner. By displaying the assembling part image 71 in a boxed manner, the display control device 10 indicates that the assembling part image 71 has been selected by the user.

In the details display area 63 of the screen 61, as a result of the selection of the assembling part image 71, a plurality of configuration element images is displayed that indicates a plurality of constituent elements of the assembling part indicated by the assembling part image 71.

The assembling part image 72 indicates an assembling part that is a constituent element of the assembling part indicated by the assembling part image 71. If the user wishes to change the assembling part indicated by the assembling part image 72 to a constituent element of the assembling part indicated by the assembling part image 73, the user associates the assembling part image 72 to the assembling part image 73.

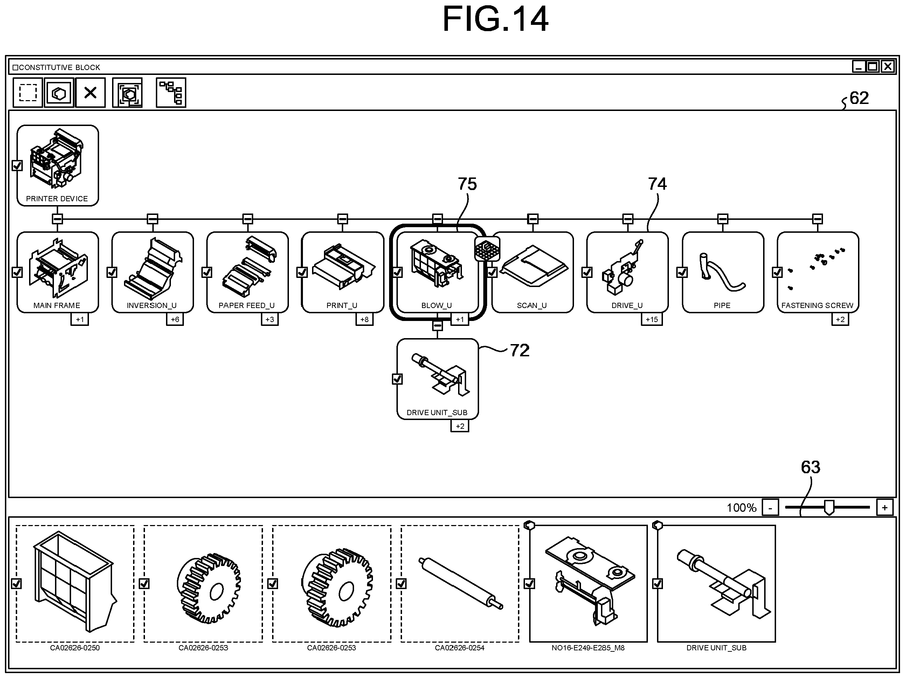

FIG. 14 is a diagram illustrating a screen after a single image has been associated to another image in the screen illustrated in FIG. 13. Regarding a plurality of assembling part images displayed in the overview display area 62 of the screen 61, as a result of the assembling part image 72 getting associated to the assembling part image 73 illustrated in FIG. 13, the assembling part image 71 gets substituted by an assembling part image 74 as illustrated in FIG. 14. The assembling part image 74 represents an image formed when the assembling part image 72 is removed from the assembling part image 71. Moreover, the assembling part image 73 is substituted by an assembling part image 75, which represents an image formed when the assembling part image 72 is added to the assembling part image 73. At that time, in the assembling part image 75, the assembling part image 72 is displayed in such a way that the display positions of the assembling part images 73 and 72 have the same positional relationship as the positional relationship therebetween after the assembling parts indicated by the assembling part images 73 and 72 are assembled into the finished product. Moreover, the assembling part image 72 is moved closer to the assembling part image 75 and is joined to the assembling part image 75 by a line.

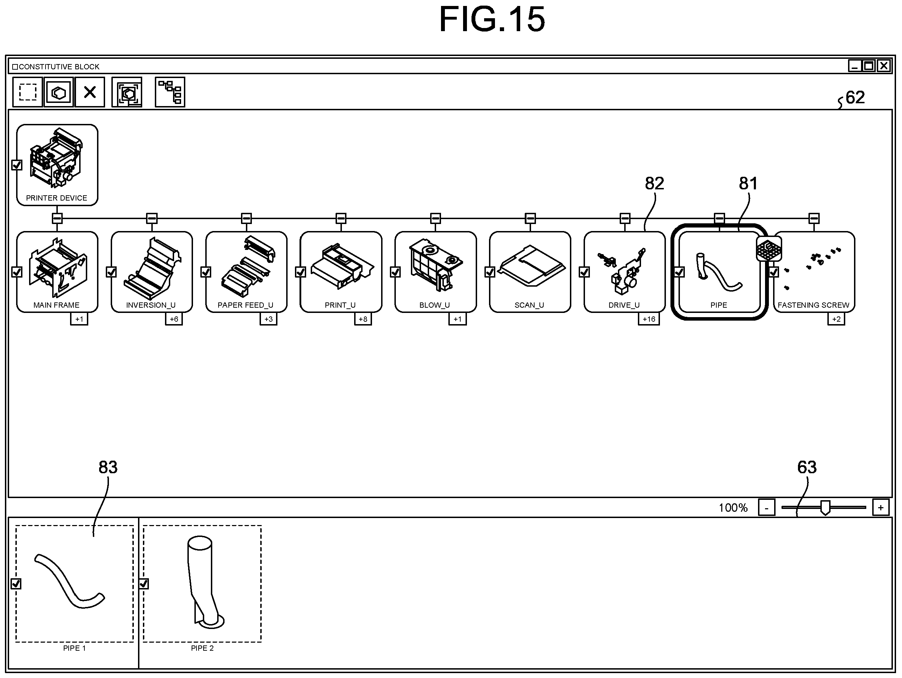

FIG. 15 is a diagram illustrating still another example of the screen displayed on the display unit. As illustrated in FIG. 15, a plurality of assembling part images is displayed in the overview display area 62 of the screen 61. The assembling part images include assembling part images 81 and 82. The assembling part image 81 has been selected by the user. In the details display area 63 of the screen 61, as a result of the selection of the assembling part image 81, a plurality of configuration element images is displayed that indicates a plurality of constituent elements of the assembling part indicated by the assembling part image 81. The constituent element images include an individual component image 83. When the user wishes to change the individual component indicated by the individual component image 83 to be a constituent element of the assembling part indicated by the assembling part image 82, the user associates the individual component image 83 to the assembling part image 82.

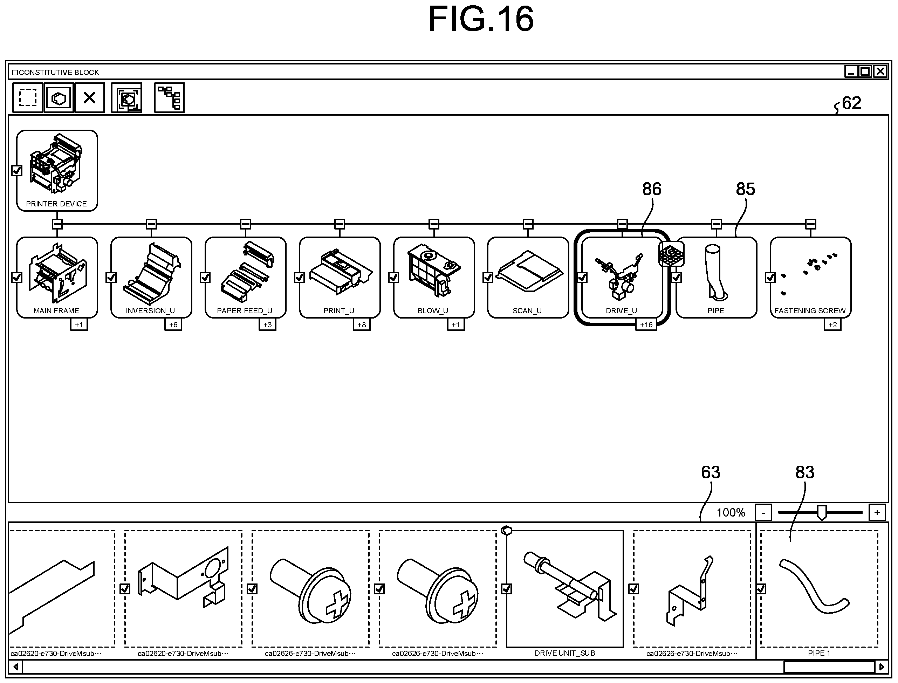

FIG. 16 is a diagram illustrating the screen after a single image has been associated to another image in the screen illustrated in FIG. 15. Regarding a plurality of assembling part images displayed in the overview display area 62 of the screen 61, as a result of the individual component image 83 getting associated to the assembling part image 82 illustrated in FIG. 15, the assembling part image 81 gets substituted by an assembling part image 85 as illustrated in FIG. 16. The assembling part image 85 represents an image formed when the individual component image 83 is removed from the assembling part image 81. Moreover, the assembling part image 82 is substituted by an assembling part image 86, which represents an image formed when the individual component image 83 is added to the assembling part image 82. At that time, in the assembling part image 86, the individual component image 83 is displayed in such a way that the display positions of the assembling part image 82 and the individual component image 83 have the same positional relationship as the positional relationship therebetween after the assembling part indicated by the assembling part image 82 and the individual component indicated by the individual component image 83 are assembled into the finished product. Moreover, unlike in the case illustrated in FIG. 14, since the individual component image 83 does not indicate any assembling part, it is not displayed in the overview display area 62. When the assembling part image 86 is selected, the individual component image 83 is displayed in the details display area 63.

In the display control method according to the embodiment, the display control device 10 obtains the CAD data 30 of an assembly. Then, from among the assembling parts and the individual components representing the constituent elements of the assembly indicated by the obtained CAD data 30; the display control device 10 displays, in the overview display area 62, the an image corresponding to the assembling part excluding the individual component as well as displays the image corresponding to the assembly. When the selection of the image corresponding to the assembly is received, the display control device 10 displays, in the details display area 63 that is different than the overview display area 62, a list of images that includes the images corresponding to the assembling parts representing the constituent elements of the assembly and includes the images corresponding to the individual components.

In this display control method, the image of the assembly and the images of the assembling parts are displayed in the overview display area 62, and the images of the assembling parts and the images of the individual components constituting the assembly are displayed in the details display area 63. As a result, the overall configuration and the assembling configuration of the assembly can be displayed in an easy-to-understand manner.

Moreover, in the display control method according to the embodiment, in response to a received instruction for associating a particular constituent element from among the constituent elements of a first assembling part to another assembling part, the image corresponding to the first assembling part is updated to an image of an assembling part not including the particular configuration element. Moreover, in the display control method, the image of the other assembling part is updated to the image corresponding to an assembling part in which the particular constituent element is added. Due to such a display control method, when a constituent element of the source assembling part is set as a constituent element of the destination assembling part, the image of the source assembling part and the image of the destination assembling part are updated so that the overall configuration and the assembling configuration before and after the change can be displayed in an easy-to-understand manner.

Furthermore, in the display control method according to the embodiment, in the image corresponding to the other assembling part, the position at which the particular constituent element is added is controlled to be a different position than the positions of the other constituent elements depending on the position of the particular constituent element in the assembly. As a result of such a display control method, in the assembling part image to which the constituent element is associated, the image of the constituent element is displayed in such a way that the display positions of the assembling part and the constituent element have the same positional relationship as the positional relationship therebetween after they are assembled into the finished product. Hence, by viewing such an assembling part image, the user can easily confirm whether or not the change of the constituent element in the assembling part is appropriate.

Meanwhile, in the display control method according to the embodiment, although the image of the added constituent element has a fixed display position in the assembling part image; alternatively, the concerned image can be displayed to have a different positional relationship than the positional relationship between the assembling part and the constituent element in the finished product. In the display control method according to the embodiment, even if the concerned image is displayed to have a different positional relationship, since the image of the source assembling part and the image of the destination assembling part are updated, the overall configuration and the assembling configuration before and after the change can be displayed in an easy-to-understand manner.

Moreover, in the display control method according to the embodiment, the images of assembling parts and the images of individual components are displayed in the details display area 63 in the same sequence as the sequence in which the assembling parts and the individual components are assembled in the assembly. As a result of such a display control method, since the images of the constituent elements of an assembly are displayed in the sequence of assembling, the assembling configuration can be displayed in an easy-to-understand manner.

In the display control method according to the embodiment, in the details display area 63, although the assembling parts and the individual components are displayed in the same sequence as the sequence of assembling in the assembly, they can be alternatively displayed in a different sequence. In the display control method according to the embodiment, even if the assembling parts and the individual components are displayed in a different sequence, since the overview display area 62 and the details display area 63 are displayed, the overall configuration and the assembling configuration of the assembly can be displayed in an easy-to-understand manner.

Moreover, in the display control method according to the embodiment, in response to a received instruction for associating a first image, which is displayed in the overview display area 62, to the virtual block 69; the display control device 10 displays the first image in the virtual block 69. In response to a received instruction for associating a second image, which is displayed in the overview display area 62, to the virtual block 69; the display control device 10 removes a third image displayed in the virtual block 69 and updates the second image to a fourth image formed by adding the third image in the second image. Moreover, the display control device 10 updates a fifth image, which corresponds to an assembling part and which includes the constituent element corresponding to the third image, to an image formed by removing the third image from the fifth image. Furthermore, the display control device 10 updates the assembling part data indicating the constituent element of the assembling part corresponding to the second image, and updates the assembling part data indicating the constituent element of the assembling part corresponding to the fifth image.

According to such a display control method, the user can temporarily place, in the virtual block 69, such a constituent element for which the assembling configuration is not yet decided, and can do a review while imagining the constituent element assembled in the destination assembling part.

Meanwhile, in the display control method according to the embodiment, although a constituent element of a particular assembling part can be changed to be a constituent element of another assembling part using the virtual block 69, such a change in a constituent element of an assembling part can alternatively be done without using the virtual block 69. In the display control method according to the embodiment, even if a constituent element of an assembling part is changed without using the virtual block 69, since the image of the source assembling part and the image of the destination assembling part are updated, the overall configuration and the assembling configuration before and after the change can be displayed in an easy-to-understand manner.

Meanwhile, in the display control method according to the embodiment, although a constituent element of a particular assembling part is changed to be a constituent element of another assembling part as a result of a user operation, the constituent elements need not be changed. In the display control method, even if the constituent elements are not changed, since the overview display area 62 and the details display area 63 are displayed, the overall configuration and the assembling configuration of the assembly can be displayed in an easy-to-understand manner.

Meanwhile, the constituent elements of the devices illustrated in the drawings are merely conceptual, and need not be physically configured as illustrated. The constituent elements, as a whole or in part, can be separated or integrated either functionally or physically based on various types of loads or use conditions. For example, the processing units such as the obtaining unit 40, the display control unit 41, the selection receiving unit 50, the association receiving unit 51, and the temporary placement receiving unit 52 illustrated in FIG. 1 can be integrated or divided in an appropriate manner. Moreover, all or some of the processing functions implemented in the processing units can be implemented using a CPU and using computer programs analyzed and executed by the CPU, or can be implemented using hardware such as a wired logic.

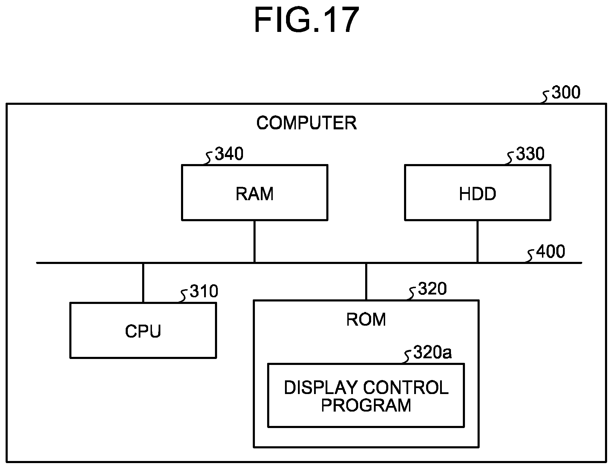

The various operations explained in the embodiment can be implemented by executing computer programs, which are written in advance, in a computer system such as a personal computer or a workstation. Given below is the explanation of an exemplary computer system that executes a computer program having the same functions as the functions explained in the embodiment. FIG. 17 is a diagram illustrating an exemplary computer that executes a display control program.

As illustrated in FIG. 17, a computer 300 includes a central processing unit (CPU) 310, a read only memory (ROM) 320, a hard disk drive (HDD) 330, and a random access memory (RAM) 340. The constituent elements 310 to 340 are connected to each other via a bus 400.

The ROM 320 is used to store in advance a display control program 320a that implements functions identical to the functions of the processing units according to the embodiment described above. For example, the display control program 320a that is stored implements functions identical to the functions of the obtaining unit 40, the display control unit 41, the selection receiving unit 50, the association receiving unit 51, and the temporary placement receiving unit 52 according to the embodiment described above. Meanwhile, the display control program 320a can be split in an appropriate manner.

The HDD 330 is used to store a variety of data. For example, the HDD 330 is used to store the OS and a variety of data.

The CPU 310 reads the display control program 320a from the ROM 320, and performs operations identical to the operations performed by the processing units according to the embodiment. That is, the display control program 320a performs operations identical to the operations performed by the obtaining unit 40, the display control unit 41, the selection receiving unit 50, the association receiving unit 51, and the temporary placement receiving unit 52 according to the embodiment.

Meanwhile, the display control program 320a need not always be stored in the ROM 320 from the beginning. Alternatively, the display control program 320a can be stored in the HDD 330.

Still alternatively, for example, the display control program 320a can be stored in a portable physical medium that is inserted in the computer 300. Examples of the portable physical medium include a flexible disk (FD), a compact disk read only memory (CD-ROM), a digital versatile disk (DVD), a magneto-optical disk, and an IC card. Then, the computer 300 can read the display control program 320a from the physical medium and execute it.

Still alternatively, the display control program 320a can be stored in "another computer (or server)" that is connected to the computer 300 via a public line, the Internet, a local area network (LAN), or a wide area network (WAN). Then, the computer 300 can read the display control program 320a from the other computer and execute it.

According to one aspect of an embodiment of the invention, the overall configuration and the assembling configuration of an assembly can be displayed in an easy-to-understand manner.

## Claims

1. A display control method comprising:
obtaining (40) configuration information of an assembly;
displaying (41), from among an assembling part and an individual component representing constituent elements of the assembly indicated by the configuration information of the assembly, an image corresponding to the assembling part excluding the individual component and an image corresponding to the assembly, in a first area (62); and
displaying (41), in response to selection of the image corresponding to the assembly, a list of images, which includes an image corresponding to an assembling part representing a constituent element of the assembly and an image corresponding to the individual component, in a second area (63) different than the first area (62).

2. The display control method according to claim 1, wherein, in response to a received instruction for associating a particular constituent element from among constituent elements of a first assembling part to another assembling part, an image corresponding to the first assembling part is updated to an image corresponding to an assembling part not including the particular constituent element, and an image of the another assembling part is updated to an image corresponding to an assembling part in which the particular constituent element is added.

3. The display control method according to claim 2, wherein, in the image corresponding to the another assembling part, position at which the particular constituent element is added is controlled to be a different position than positions of other constituent elements depending on position of the particular constituent element in the assembly.

4. The display control method according to any one of claims 1 to 3, wherein the image corresponding to the assembling part and the image corresponding to the individual component are displayed in the second area (63) in same sequence as sequence in which the assembling part and the individual component are assembled in the assembly.

5. The display control method according to any one of claims 1 to 4, further including:
displaying, in response to a received instruction for associating a first image displayed in the first area (62) to a virtual block, the first image in the virtual block; and
updating, in response to a received instruction for associating a second image displayed in the first area (62) to the virtual block, that includes
removing a third image displayed in the virtual block,
updating the second image to a fourth image formed by adding the third image to the second image,
updating a fifth image, which corresponds to an assembling part including a constituent element corresponding to the third image, to an image formed by removing the third image from the fifth image, and
updating assembling part data indicating a constituent element of an assembling part corresponding to the second image and updating assembling part data indicating a constituent element of an assembling part corresponding to the fifth image.

6. A display control device comprising:
an obtaining unit (40) configured to obtain configuration information of an assembly; and
a display control unit (41) configured to
display, from among an assembling part and an individual component representing constituent elements of the assembly indicated by the configuration information of the assembly, an image corresponding to the assembling part excluding the individual component and an image corresponding to the assembly, in a first area (62), and
display, in response to selection of the image corresponding to the assembly, a list of images, which includes an image corresponding to an assembling part representing a constituent element of the assembly and an image corresponding to the individual component, in a second area (63) different than the first area (62).

7. A display control program (320a) that causes a computer (300) to execute a process comprising:
obtaining (40) configuration information of an assembly;
displaying (41), from among an assembling part and an individual component representing constituent elements of the assembly indicated by the configuration information of the assembly, an image corresponding to the assembling part excluding the individual component and an image corresponding to the assembly, in a first area (62); and
displaying (41), in response to selection of the image corresponding to the assembly, a list of images, which includes an image corresponding to an assembling part representing a constituent element of the assembly and an image corresponding to the individual component, in a second area (63) different than the first area (62).
